# EUROPÄISCHE PATENTSCHRIFT

(11) **EP 1 785 373 B1**
(45) Veröffentlichungstag und Bekanntmachung des Hinweises auf die Patenterteilung: **30.07.2008**
(21) Anmeldenummer: 06023028.1
(22) Anmeldetag: 06.11.2006
(51) Int. Cl.: B65G 47/08, B65G 47/32, B65G 47/252

(54) **Vorrichtung zur Erzeugung von Schnittholzstapeln**
Decive for forming stacks of lumber
Dispositif de formation de piles de bois de refend

(30) Priorität: 10.11.2005 DE 202005017561 U
(43) Veröffentlichungstag der Anmeldung: 16.05.2007
(73) Patentinhaber: Kallfass GmbH, 38855 Wemigerode (DE)
(72) Erfinder: Kallfass, Ernst, 72270 Klosterreichenbach (DE); Stefan, Günther, 72270 Baiersbronn-Obertal (DE); Haist, Hans, 72270 Klosterreichenbach (DE)
(74) Vertreter: Schön, Thilo

(56) Entgegenhaltungen:
- DE-A1- 2 852 741

## Beschreibung

Die Erfindung betrifft eine Vorrichtung zur Erzeugung von Schnittholzstapeln nach Anspruch 1.

### Technischer Hintergrund

In der holzverarbeitenden Industrie stellt sich häufig die Aufgabe, dass aus Schnitthölzern, die mit ihrer Längskante auf einem Förderer stehen, Schnittholzpakete erzeugt werden müssen, in denen die Schnitthölzer (Bretter) in jedem Paket übereinander liegen und wobei diese Schnittholzpakete eine einheitliche Höhe aufweisen, d.h. jeweils die gleiche Anzahl von Schnitthölzern enthalten sollen. Hierbei tritt häufig das Problem auf, dass die angeförderten, auf einer Längsseite stehenden Schnitthölzer zwar auch stapelweise angefördert werden, diese Stapel aufgrund vorgelagerter Aussortierungsprozesse jedoch eine unterschiedliche Anzahl von Schnitthölzern enthalten können.

DE 28 52 741 A1 beschreibt eine Einrichtung zum Orientieren von in Verarbeitung befindlichen Einheiten, wie insbesondere Papierrollen. Diese weist einen im Wesentlichen horizontal ausgerichteten Förderer auf, der die auf ihrem zylindrischen Umfang liegenden Papierrollen zu einer Umlenkeinrichtung transportiert. Ober diese Umlenkeinrichtung werden die Papierrollen in vertikaler Richtung stirnseitig auf einer Bühne abgestellt und anschließend auf einen horizontal ausgerichteten Förderer geschoben.

### Darstellung der Erfindung

Die vorliegende Erfindung stellt sich die Aufgabe, eine Vorrichtung zu schaffen, die zuverlässig, vollautomatisch und mit hohem Durchsatz aus auf ihrer Längskante stehenden angeförderten Schnitthölzern liegende Schnittholzstapel konstanter Höhe erzeugt.

Diese Aufgabe wird durch eine Vorrichtung mit den Merkmalen des Anspruchs 1 gelöst.

Die Vorrichtung weist eine Zuführeinrichtung auf, auf der die auf einer Längskante stehenden Schnitthölzer zugeführt werden. Diese Zuführeinrichtung kann insbesondere einen Kettenförderer oder ein anderes Förderband aufweisen. Weiterhin enthält die Vorrichtung eine Stapelaufnahme, die die erzeugten Schnittholzstapel aufnimmt. Diese Stapelaufnahme weist in der Regel ein im wesentlichen horizontal verlaufendes Förderband auf.

Zuführeinrichtung und Stapelaufnahme sind mittels einer Umlenkeinrichtung verbunden, welche wenigstens eine untere Leitfläche aufweist, welche ausgehend von der Zuführeinrichtung von der Horizontalen in die Vertikale verläuft. Das bedeutet, dass die untere Leitfläche im wesentlichen einen Viertelkreis beschreibt. Die angeförderten Schnitthölzer können somit im wesentlichen kontinuierlich umgelenkt und am Ende der Umlenkeinrichtung stapelweise entnommen werden. Hierzu dient ein horizontaler Anschlag und vorzugsweise weiterhin ein vertikaler Anschlag und ein Schieber.

Bevorzugte Ausführungsformen der Erfindung ergeben sich aus den Unteransprüchen sowie aus dem nun mit Bezug auf die Figuren näher erläuterten Ausführungsbeispiel. Hierbei zeigen:
- Figur 1: Eine Seitenansicht einer Vorrichtung zur Erzeugung von Schnittholzstapeln und
- Figur 2: einen vergrößerten Ausschnitt aus Figur 1.

### Beschreibung einer bevorzugten Ausführungsform

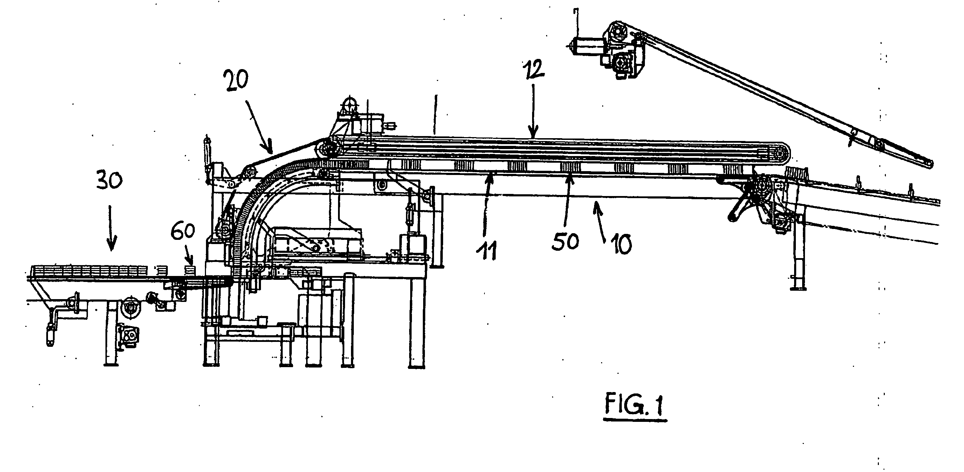

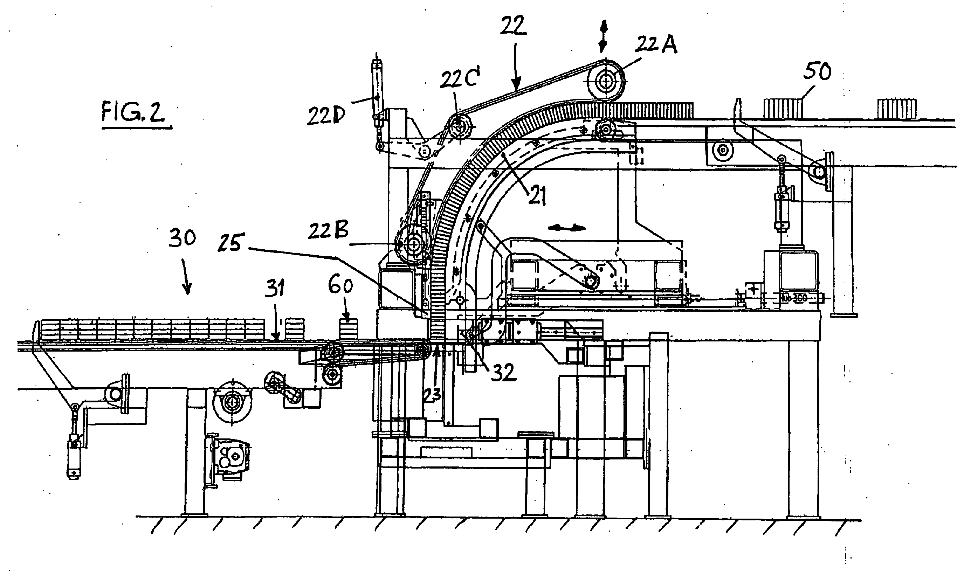

Die Figuren 1 und 2 zeigen eine Vorrichtung zur Erzeugung von Schnittholzstapeln gleicher Höhe. Die Bestandteile und deren Funktionsweise werden nun mit Bezug auf beide Figuren näher erläutert:

Auf der Zuführeinrichtung 10 werden Schnitthölzer, hier in Form von Schnittbrettern 50 gefördert. Die Schnittbretter 50 stehen jeweils auf einer Längskante und sind zu "stehenden" Stapeln zusammengefasst, wobei jedoch nicht jeder Stapel zwingend eine gleiche Anzahl an Schnittbrettern beinhalten muss. Die horizontale Zuführeinrichtung 10 besteht aus einem Kettenförderer 11 und einem oberhalb des Kettenförderers 11 angeordneten Bürstenförderer, wobei die Schnitthölzer 50 leicht klemmend zwischen Kettenförderer 11 und Bürstenförderer 12 gehalten sind. Diese Anordnung verhindert zuverlässig ein Umkippen einzelner Schnittbretter 50. Der Bürstenförderer 12 ist in der Höhe verstellbar, so dass der Abstand zwischen Kettenförderer 11 und Bürstenförderer 12 auf die Höhe der Schnittbretter 50 angepasst werden kann.

An das Ende der Zuführeinrichtung 10 schließt sich die Umlenkeinrichtung 20 an, welche aus dem die untere Leitfläche aufweisenden Leitblech 21 und dem oberen Förderband 22 besteht. Das Leitblech 21 schließt sich unmittelbar an den Kettenförderer 11 an, die Tangente der unteren Leitfläche verläuft in diesem Punkt also im wesentlichen horizontal. Hiervon ausgehend beschreibt das Leitblech 21 im wesentlichen einen Viertelkreis mit einem Radius von ca. 1,2 m, so dass die Tangente der unteren Leitfläche an seinem Ende im wesentlichen vertikal steht. Oberhalb der unteren Leitfläche ist das obere Förderband 22 über mehrere Walzen 22a,22b,22c, welche sich in unterschiedlichen Höhen befinden, geführt. Der dem Leitblech 21 zugewandte Abschnitt dieses oberen Förderbandes 22 bildet eine obere Leitfläche und drückt die Schnittbretter 50 auf das Leitblech 21, so dass dieser Abschnitt des oberen Förderbandes 22, also die obere Leitfläche, der Krümmung der unteren Leitfläche folgt. Der Abstand zwischen unterer und oberer Leitfläche ist einstellbar, um Schnittbretter unterschiedlicher Höhe verarbeiten zu können.

Unterhalb des Leitbleches 21 ist der in der Höhe verstellbare horizontale Anschlag 23 angeordnet, dem oberen Förderband 22 ist der vertikale Anschlag 25 nachgeordnet. Dieser vertikale Anschlag bildet das untere Ende der oberen Leitfläche. Der horizontale Anschlag 23 und die untere Kante des vertikalen Anschlags 25 werden auf einen Abstand eingestellt, der geringfügig größer ist als die Höhe der zu erzeugenden Schnittholzstapel 60. Neben dem unteren Anschlag 23 ist der horizontal bewegliche Schieber 32 angeordnet, der so ausgestaltet ist, dass er in seiner ersten Totstellung, wie sie in den Figuren 1 und 2 dargestellt ist, den unteren Anschlag 23 vollständig freigibt und in seiner zweiten Totstellung (nicht dargestellt) den unteren Anschlag 23 vollständig überstreicht. Die Höhe des Schiebers 32 ist etwas geringer als der Abstand zwischen horizontalem Anschlag 23 und der Unterkante des vertikalen Anschlags 25 eingestellt. An den horizontalen Anschlag 23 schließt sich die Stapelaufnahme 30 an, die hier in Form eines Förderbandes 31 ausgebildet ist.

Die Funktionsweise der Vorrichtung ist wie folgt: Die auf dem Kettenförderer 11 auf einer Längsseite stehenden Schnittbretter 50 werden bis zur Umlenkeinrichtung 20 gefördert und von da in Richtung des horizontalen Anschlags 23 umgelenkt, wo sie aufgestaut werden. Hierbei erfahren die Schnittbretter 50 eine Drehung um 90°, so dass sie hier eine liegende Position aufweisen. Der Schieber 32 führt eine oszillierende Bewegung durch, wobei er jeweils eine bestimmte Anzahl der untersten Schnittbretter 50 in Form eines Stapels 60 ausschiebt. Die Höhe dieses Stapels 60 beziehungsweise die Anzahl der Schnittbretter 50 pro Stapel ist durch den einstellbaren Abstand zwischen horizontalem Anschlag 23 und vertikalem Anschlag 25 vorgegeben. Der vertikale Anschlag 25 dient somit als Abstreifer. Hierdurch gelangt bei jedem Hub ein liegender Schnittholzstapel konstanter Höhe auf das Förderband 32, von welchem dieser weggefördert wird.

### Bezugszeichen

- Zuführeinrichtung: 10
- Kettenförderer: 11
- Bürstenförderer: 12
- Umlenkeinrichtung: 20
- Leitblech: 21
- horizontaler Anschlag: 23
- vertikaler Anschlag: 25
- Stapelaufnahme: 30
- Förderband: 31
- Schieber: 32
- Schnittbretter: 50
- Stapel: 60

## Patentansprüche

1. Vorrichtung zur Erzeugung von Paketen mit gleicher Anzahl von Elementen mit einer im Wesentlichen horizontalen Zuführeinrichtung (10), einer an die Zuführeinrichtung (10) anschließenden Umlenkeinrichtung (20) mit mindestens einer von der Horizontalen in die Vertikale verlaufenden unteren Leitfläche, einem horizontalen Anschlag (23) unterhalb des vertikalen Endes der Leitfläche und einer an den horizontalen Anschlag (23) auf gleicher Höhe anschließenden Stapelaufnahme (30), **dadurch gekennzeichnet, dass**, die Pakete durch Schnitthölzer (50) gebildet sind, die auf einer Längskante stehend über die Zuführeinrichtung (10) zuführbar sind und aus denen Schnittholzstapel (60) gleicher Höhe gebildet werden, die von der Stapelaufnahme (30) aufgenommen werden, wobei die Zuführeinrichtung (10) aus einem Kettenförderer (11) und einem über diesem parallel laufenden in der Höhe verstellbaren Bürstenförderer (12) gebildet ist, die die Schnittbretter in ihrer Lage halten.

2. Vorrichtung nach Anspruch 1, **dadurch gekennzeichnet, dass** die untere Leitfläche die Oberfläche eines bogenförmig gestalteten Leitblechs (21) mit einem Radius von ca. 1,2 m ist.

3. Vorrichtung nach Anspruch 1 oder 2, **dadurch gekennzeichnet, dass** parallel zur ersten Leitfläche eine bogenförmig geführte obere Leitfläche angeordnet ist, und der Abstand der beiden Leitftächen einstellbar ist, so dass er etwa der Höhe der Schnittbretter (50) entspricht.

4. Vorrichtung nach Anspruch 3, **dadurch gekennzeichnet, dass** die obere Leitfläche zumindest abschnittsweise durch ein über in unterschiedlichen Höhen gelagerte Walzen (22A,22B,22C) geführtes Förderband (22) gebildet ist.

5. Vorrichtung nach Anspruch 3 oder 4, **dadurch gekennzeichnet, dass** der Abstand der unteren Enden der Leitflächen vom horizontalen Anschlag (23) auf die Höhe der zu erzeugenden Schnittholzstapel (60) einstellbar ist, und das untere Ende der oberen Leitfläche als vertikaler Anschlag (25) ausgebildet ist, dessen untere Kante auf einen Abstand vom horizontalen Anschlag einstellbar ist, der im wesentlichen der Höhe der zu erzeugenden Schnittholzstapel entspricht.

6. Vorrichtung nach einem der Ansprüche 1 bis 5, **dadurch gekennzeichnet, dass** die Stapelaufnahme (30) aus einem Förderband (31) und einem Schieber (32) gebildet ist, der jeweils eine auf dem horizontalen Anschlag (23) auf ihrer Breitseite abgelagerte Anzahl von Schnitthölzern Stapel für Stapel (50) auf das Förderband (31) schiebt.

## Claims

1. Apparatus for producing groups having an equal number of elements, having a substantially horizontal feed means (10), a deflection means (20) connecting with the feed means (10) and having at least one lower guiding surface extending from the horizontal to the vertical, a horizontal stop member (23) beneath the vertical end of the guiding surface, and a stack holder (30) connecting with the horizontal stop member (23) at the same height, **characterised in that** the groups are formed by sawn timbers (50), which can be fed, standing on a longitudinal edge, via the feed means (10), and from which timbers are formed stacks of sawn timber (60) of equal height, which are received by the stack holder (30), the feed means (10) being formed from a chain conveyor (11) and a vertically adjustable brush conveyor (12) running parallel above said chain conveyor, which conveyors retain the sawn boards in their position.

2. Apparatus according to claim 1, **characterised in that** the lower guiding surface is the surface of an arcuately configured guiding sheet (21) with a radius of approx. 1.2 m.

3. Apparatus according to claim 1 or 2, **characterised in that** an arcuately extending upper guiding surface is disposed parallel to the first guiding surface, and the spacing between the two guiding surfaces can be set so that it corresponds substantially to the height of the sawn boards (50).

4. Apparatus according to claim 3, **characterised in that** the upper guiding surface is formed, at least in sections, by a conveyor belt (22) which is guided over rollers (22A, 22B, 22C) mounted at different heights.

5. Apparatus according to claim 3 or 4, **characterised in that** the spacing between the lower ends of the guiding surfaces and the horizontal stop member (23) can be set to the height of the stacks of sawn timber (60) to be produced, and the lower end of the upper guiding surface is in the form of a vertical stop member (25), the lower edge of which can be set to a spacing from the horizontal stop member which corresponds substantially to the height of the stacks of sawn timber to be produced.

6. Apparatus according to one of claims 1 to 5, **characterised in that** the stack holder (30) is formed from a conveyor belt (31) and a slide (32), which respectively slides a number of sawn timbers, stored on the horizontal stop member (23) on their wide side, stack by stack (50) onto the conveyor belt (31).

## Revendications

1. Dispositif pour produire des paquets d'un même nombre d'éléments avec un dispositif d'amenée (10) sensiblement horizontal, un dispositif de renvoi (20) se raccordant au dispositif d'amenée (10) avec au moins une surface de guidage inférieure s'étendant de l'horizontale à la verticale, une butée horizontale (23) au-dessous de l'extrémité verticale de la surface de guidage et une réception de piles (30) se raccordant à la butée horizontale (23), à même hauteur, **caractérisé en ce que** les paquets sont formés par des bois de refend (50) qui peuvent être amenés debout sur un chant longitudinal, par le dispositif d'amenée (10), et à partir desquels sont formées des piles de refend (60) de même hauteur qui sont reçues par la réception de piles 30, le dispositif d'amenée (10) étant formé d'un convoyeur à chaîne (11) et d'un convoyeur à brosses (12), de hauteur réglable, s'étendant parallèlement au-dessus de celui-ci, lesquels maintiennent les bois de refend dans leur position.

2. Dispositif selon la revendication 1, **caractérisé en ce que** la, surface de guidage inférieure est la surface d'une tôle de guidage (21) en forme d'arc d'un rayon d'environ 1,2 m.

3. Dispositif selon l'une quelconque des revendications 1 ou 2, **caractérisé en ce que** parallèlement à la première surface de guidage est disposée une surface de guidage supérieure guidée en forme d'arc, et l'écartement des deux surfaces de réglage est réglable, ce qui fait qu'il correspond approximativement à la hauteur des bois de refend (50).

4. Dispositif selon la revendication 3, **caractérisé en ce que** la surface de guidage supérieure est formée au moins par endroits par une bande de convoyage (22) guidée par des rouleaux (22A, 22B, 22C) supportés à différentes hauteurs.

5. Dispositif selon l'une quelconque des revendications 3 ou 4, **caractérisé en ce que** la distance des extrémités inférieures des surfaces de guidage par rapport à la butée horizontale (23) est réglable à la hauteur des piles de bois de refend (60) à produire, et l'extrémité inférieure de la surface de guidage supérieure est réalisée en tant que butée verticale (25) dont le bord inférieur est réglable à une distance par rapport à la butée horizontale qui correspond sensiblement à la hauteur des piles de bois de refend à produire.

6. Dispositif selon l'une quelconque des revendications 1 à 5, **caractérisé en ce que** la réception de piles (30) est formée d'une bande de convoyage (31) et d'un pousseur (32) qui pousse chaque fois un nombre de bois de refend, déposés sur la butée horizontale (23) sur le côté de sa largeur, pile après pile (50), sur la bande de convoyage (31).
